# EUROPÄISCHE PATENTSCHRIFT

(11) **EP 1 589 248 B1**
(45) Veröffentlichungstag und Bekanntmachung des Hinweises auf die Patenterteilung: **31.07.2013**
(21) Anmeldenummer: 05007731.2
(22) Anmeldetag: 08.04.2005
(51) Int. Cl.: F16D 48/06, F16D 13/75

(54) **Verfahren zum Betätigen eines automatisierten Kupplungssytems**
Method to actuate an automated clutch system
Procédé pour actionner un système automatisé d'embrayage

(30) Priorität: 22.04.2004 DE 102004019513
(43) Veröffentlichungstag der Anmeldung: 26.10.2005
(73) Patentinhaber: ZF Friedrichshafen AG, 88046 Friedrichshafen (DE)
(72) Erfinder: Peterseim, Michael, 97493 Bergrheinfeld (DE); Vogt, Sebastian, 97616 Bad Neustadt (DE); Bindig, Sebastian, 97503 Gädheim (DE)

(56) Entgegenhaltungen:
- EP-A- 1 375 950
- EP-A1- 1 568 905
- DE-A1- 10 316 445
- DE-A1- 19 934 853
- FR-A- 2 767 167
- US-A- 6 113 517
- US-A1- 2003 106 767

## Beschreibung

Die vorliegende Erfindung betrifft ein Verfahren zum Betätigen eines automatisierten Kupplungssystems des Normal-Offen-Typs, welches Kupplungssystem wenigstens einen Kupplungsbereich mit einer durch ein Einrückkrafterzeugungssystem beaufschlagbaren Anpressplatte, einem Widerlager und einer zwischen der Anpressplatte und dem Widerlager einspannbaren Kupplungsscheibenanordnung umfasst, wobei das Einrückkrafterzeugungssystem eine Aktuatoranordnung aufweist, welche wenigstens einen Teil der zum Beaufschlagen der Anpressplatte erforderlichen Einrückkraft bereitstellt, ferner umfassend eine Verschleißkompensationsanordnung mit einem Verschleißerfassungsbereich und einem Verschleißnachstellbereich.

Derartige Kupplungen, wie sie vorangehend beschrieben worden sind, werden allgemein als Normal-Offen-Kupplungen bezeichnet. Das heißt, dies sind Kupplungen, bei welchen die zur Drehmomentübertragung erforderliche Anpreßkraft nicht oder nicht nur durch einen Kraftspeicher, wie z.B. eine Membranfeder o.dgl., bereitgestellt wird. Vielmehr ist bei derartigen Kupplungssystemen eine Aktuatoranordnung vorgesehen, durch die zumindest einen Teil derjenigen Kraft bereitgestellt wird, mit welcher eine Anpressplatte beaufschlagt wird, um durch entsprechendes Einspannen der Reibbeläge einer Kupplungsscheibe zwischen der Anpressplatte und einem Widerlager, beispielsweise einem Schwungrad oder einer Zwischenplatte, die gewünschten Reibverhältnisse einzustellen.

Um bei derartigen Kupplungssystemen die über die Betriebslebensdauer hinweg akkumulierte Belastung so gering als möglich zu halten, kann so vorgegangen werden, dass beim Einrücken derselben nur eine derart große Anpreßkraft bereitgestellt wird, welche die Übertragung des für einen bestimmten Betriebszustand gewünschten zu übertragenden Drehmoments gewährleistet. Dieses Drehmoment kann beispielsweise aus dem Motorkennfeld und dem momentanen Betriebszustand eines Antriebsmotors ermittelt werden, und aus dem ebenfalls bekannten Zusammenhang zwischen Einrückkraft bzw. Einrückweg und über die Kupplung übertragbarem Drehmoment kann dann durch entsprechende Ansteuerung der Aktuatoranordnung das gewünschte Kupplungsmoment bereitgestellt werden. Dabei kann die Einrückkraft beispielsweise ermittelt werden durch Erfassung des Einrückweges, der bei derartigen Systemen aufgrund der bekannten kinematischen Verhältnissen grundsätzlich mit der bereitgestellten Einrückkraft korrespondiert, kann aber beispielsweise auch direkt als Kraft erfasst werden, beispielsweise als die in der Aktuatoranordnung erzeugte Kraft.

Bei derartigen Kupplungssystemen ergibt sich also die Situation, dass praktisch fast während der gesamten Betriebsdauer nicht das maximal mögliche Kupplungsmoment bereitgestellt werden muss, sondern das tatsächlich bereitgestellte Kupplungsmoment deutlich kleiner ist, eben so groß, dass das zu übertragende Drehmoment gerade noch ohne Schlupf oder gewünschtenfalls auch mit Schlupf übertragen wird. Dies wiederum hat zur Folge, dass aufgrund der insbesondere im Bereich der Reibbeläge einer Kupplungsscheibe im Allgemeinen vorhandenen Elastizitäten die Anpressplatte meistens nicht so weit verlagert wird, wie dies im maximalen Falle möglich wäre. Diese Elastizitäten umfassen beispielsweise die Belag federungen in derartigen Kupplungsscheiben. Wird also ein Kupplungsmoment eingestellt, das deutlich unter dem maximal übertragbaren Kupplungsmoment ist, so wird dies im Allgemeinen auch zur Folge haben, dass die Belagsfederungen in der Kupplungsscheibe nicht maximal komprimiert werden und somit die Anpressplatte nicht ihren maximal möglichen Einrückhub durchläuft.

Die in derartigen Kupplungssystemen im Allgemeinen bereitgestellten Verschleißkompensationsanordnungen arbeiten derart, dass bei Durchführung von Betätigungsvorgängen, beispielsweise Einrückvorgängen, die Bewegung einer dabei sich bewegenden Komponente, beispielsweise der Anpressplatte, bezüglich einer sich nicht oder in anderer Art und Weise verlagernden Komponente, beispielsweise einem Kupplungsgehäuse oder dem Widerlager, erfasst wird. Diese Erfassung zielt insbesondere daraufhin ab, in einer definierten Betätigungsstellung, beispielsweise der maximal möglichen Einrückstellung der Anpressplatte, die Lage derselben bezüglich einer Referenz zu erfassen, also beispielsweise bezüglich des Gehäuses. Diese Lage wird sich bei Auftreten von Verschleiß ändern, da mit dünner werdenden abgeriebenen Reibbelägen die Anpressplatte sich näher an das Widerlager heranbewegen wird und somit eine andere Lage bezüglich der Referenz einnehmen wird. Diese geänderte Lage bezüglich der Referenz wird erfasst und nachfolgend in einem Verschleißkompensationsvorgang in eine entsprechende Kompensation durch Dickenausgleich umgesetzt.

Aufgrund der vorangehend geschilderten Situation, dass bei derartigen automatisierten Kupplungssystemen jedoch beispielsweise die Anpressplatte oder eine im Zusammenhang mit der Bewegung derselben sich auch bewegende Komponente nicht immer so weit verlagert wird, wie dies zur definierten Erfassung von Verschleiß erforderlich wäre, kann eine Situation auftreten, dass, trotz Auftreten von Verschleiß dieser tatsächlich nicht erkannt wird, weil die Anpressplatte nicht so weit bewegt worden ist, dass eine entsprechende Wechselwirkung bei der Verschleißerfassung möglich gewesen wäre bzw. eine vollständige Wechselwirkung, um tatsächlich den vollständigen Verschleiß zu erfassen. Die Folge ist, dass trotz Auftreten von Verschleiß überhaupt keine Verschleißkompensation stattfindet oder dann, wenn nur ein Teil des Verschleißes erkannt wird, eine Unterkompensation stattfindet.

Aus der DE 199 34 853 A1 ist eine Vorgehensweise zur Betätigung eines Kupplungssystems des Normal-Offen-Typs zur Durchführung einer Verschleißkompensation bekannt Wird bei dieser bekannten Vorgehensweise aus der bei Betätigungsvorgängen zum Einrücken während des Fahrbetriebs ermittelten Lage des Greifpunkts der Kopplung auf das Vorliegen von Verschleiß erkannt, wird durch einen Aktuator eine Verstellung in Ausrückrichtung in einem derartigen Ausmaß herbeigerufen, dass eine Verschleißnachstelleinheit entlastet wird und mithin der aus der Lage des Greifpunkts ermittelte Verschleiß kompensiert wird. Es ist die Aufgabe der vorliegenden Efindung, ein Verfahren zum Betätigen eines automatisierten Kupplungssystems vorzusehen, mit welchem eine zuverlässige Erfassung und Kompensation von Verschleiß sichergestellt werden kann.

Erfindungsgemäß wird diese Aufgabe gelöst durch ein Verfahren gemäß Anspruch 1.

Mit dem erfindungsgemäßen Verfahren wird zwangsweise dafür gesorgt, dass ein Kupplungsbereich unabhängig davon, wie er im normalen Drehmomentübertragungsbetrieb zu betätigen ist, in eine Betätigungsstellung gebracht wird, bei welcher in definiert reproduzierbarer Art und Weise der Verschleiß erfasst wird und dementsprechend auch kompensiert werden kann.

Um im normalen Fahrbetrieb zum Einrücken bzw. Eingerückthalten einer Kupplung oder eines Kupplungsbereichs so wenig Kraft bzw. Energie als möglich aufwenden zu müssen, gleichwohl jedoch das erforderliche Moment übertragen zu können, wird vorgeschlagen, dass bei Durchführung der Maßnahme a) eine Einrückkraft erzeugt wird, welche in dem Kupplungsbereich die Bereitstellung eines Kupplungsmomentes bewirkt, das im Bereich des über den Kupplungsbereich zu übertragenden Drehmomentes liegt.

Zum Sicherstellen, dass zur Durchführung einer Verschleißkompensation immer in definierter Art und Weise die Anpressplatte in eine die vollständige und korrekte Verschleißerfassung gestattende Lage gebracht wird, wird vorgeschlagen, dass bei Durchführung der Maßnahme b) als Verschleißkompensations-Einrückkraft eine von dem Einrückkraftübertragungssystem maximal erzeugbare Einrückkraft bereitgestellt wird. Erfindungsgemäß wird bei Durchführung der Maßnahme b) als Verschleißkompensations-Einrückkraft eine Einrückkraft bereitgestellt wird, welche eine maximale Einrückverlagerung der Anpressplatte bewirkt.

Um sicherzustellen, dass bei dem im Betrieb zwangsweise auftretenden Verschleiß einer Reibungskupplung in sinnvollen Intervallen dafür gesorgt wird, dass die erforderlichen Kompensationsmaßnahmen durchgeführt werden, wird vorgeschlagen, dass ein Verschleißkompensationsparameter bestimmt wird und mit einer Referenzgröße verglichen wird, wobei dann, wenn im Wesentlichen Übereinstimmung zwischen dem Verschleißkompensationsparameter und der Referenzgröße erkannt wird, die Maßnahme b) durchgeführt wird.

Da im Allgemeinen der Verschleiß einer Kupplung stark korreliert ist mit der Anzahl an durchzuführenden und den Verschleiß im Wesentlichen involvierenden Betätigungsvorgängen, wird vorgeschlagen, dass der Verschleißkompensationsparameter die Anzahl an durchgeführten Kupptungsbetätigungsvorgängen repräsentiert.

Auch die in einer Reibungskupplung, insbesondere bei Durchführung von Betätigungsvorgängen aufgebrachte Reibarbeit kann eine sinnvolle Größe zur Maßgabe der Durchführung eines Verschleißkompensationsvorgangs sein, ebenso wie die insgesamt über eine Kupplung übertragene Energie. Auch die mit einem Fahrzeug zurückgelegte Gesamtfahrstrecke kann ein sinnvolles Maß dafür sein, dass bzw. wann eine Kompensation vorgenommen werden sollte. Auch die verstrichene Zeit, beispielsweise seit erster Inbetriebnahme oder seit der letzten gezielten Durchführung einer Verschleißkompensation, kann eine sinnvolle Anhaltsgröße sein.

Selbstverständlich ist es auch möglich, die Maßnahme b) jedesmal dann durchzuführen, wenn auch die Maßnahme a) durchgeführt wird, d.h. die Kupplung betätigt wird. Dabei ist es besonders sinnvoll, wenn nach der Durchführung der Maßnahme b) die zur Durchführung der Maßnahme a) für diesen speziellen Einkuppelvorgang bestimmte Einrückkraft bereitgestellt wird. Hier kann also so vorgegangen werden, dass bei einem Einkuppelvorgang zunächst die Kupplung oder der Kupplungsbereich gezielt in die zum sicheren Erfassen des Verschleißes vorgesehene Stellung gebracht wird und nach Verschleißerfassung dann beispielsweise durch Mindern der Einrückkraft eine Zurückverstellung in Richtung Ausrücken stattfindet, und zwar so weit, bis die gewünschte Einrückkraft bzw. das gewünschte Kupplungsmoment anliegt.

Bei einem Kupplungssystem, bei dem das erfindungsgemäße Verfahren durchgeführt werden kann, kann beispielsweise vorgesehen sein, dass der Verschleißnachstellbereich im Einrückkraftübertragungsweg zur Anpressplatte oder/und im Einrückreaktionskraftabstützweg wenigstens ein nach Auftreten und Erfassen von Verschleiß verlagerbares Verschleißnachstellelement umfasst. Auch ist es möglich, dass der Verschleißerfassungsbereich wenigstens ein Verschleißerfassungselement umfasst, das bei Auftreten von Verschleiß in Verschleißerfassungswechselwirkung mit einem Verschleißerfassungsgegenelement bringbar ist und dadurch in eine den aufgetretenen Verschleiß repräsentierende Lage bringbar ist, welche dem Verschleißnachstellbereich die Durchführung eines Verschleißnachstellvorgangs ermöglicht.

Die vorliegende Erfindung wird nachfolgend mit Bezug auf die beiliegenden Zeichnungen detailliert beschrieben. Es zeigt:
- Fig. 1: eine Teil-Schnittansicht einer Reibungskupplung;
- Fig. 2: eine der Fig. 1 entsprechende Ansicht einer alternativ ausgestalteten Reibungskupplung;
- Fig. 3: eine Schnittansicht einer Doppelkupplung.

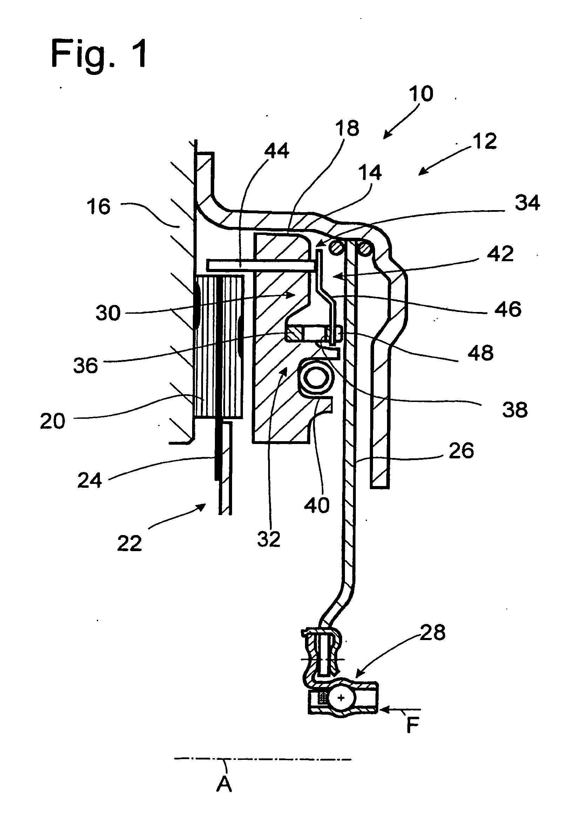

In Fig. 1 ist eine Reibungskupplung allgemein mit 10 bezeichnet. Diese als so genannte Normal-Offen-Reibungskupplung hier dargestellte Kupplung umfasst eine Druckplattenbaugruppe 12, deren Gehäuse 14 im radial äußeren Bereich an einer Schwungmasse 16, also beispielsweise einem Schwungrad, Zweimassenschwungrad o.dgl., festgelegt ist. Das Schwungrad ist mit einer Antriebswelle, beispielsweise einer Kurbelwelle einer Brennkraftmaschine dann zur gemeinsamen Drehung verbunden oder zu verbinden.

Im Inneren des Gehäuses 14 ist eine Anpressplatte 18 vorgesehen. Diese ist mit dem Gehäuse 14 zur gemeinsamen Drehung um eine Drehachse A gekoppelt, ist jedoch in dem Gehäuse 14 in Richtung der Drehachse A verlagerbar. Zum Bereitstellen dieser Kopplung können beispielsweise so genannte Tangentialblattfedern vorgesehen sein, die nicht nur die Drehankopplung bewerkstelligen, sondern auch dafür sorgen, dass bei Durchführen von Auskuppelvorgängen die Anpressplatte 18 sich axial vom Schwungrad 16 weg bewegt.

Zwischen der Anpressplatte 18 und dem Schwungrad 16 liegen die Reibbeläge 20 einer Kupplungsscheibe 22. Diese Reibbeläge 20 sind im Allgemeinen über nicht dargestellte Belagsfederungen an einem Reibbelagträger 24 getragen, der dann über einen Nabenbereich an eine nicht dargestellte Abtriebswelle, beispielsweise Getriebeeingangswelle, angekoppelt sein kann.

Im Gehäuse 14 ist ferner eine Kraftbeaufschlagungsanordnung 26 vorgesehen, über welche eine Betätigungskraft in die Anpressplatte 18 eingeleitet werden kann. Diese Kraftbeaufschlagungsanordnung 26 kann im Falle einer derartigen Kupplung des Normal-Offen-Typs eine Mehrzahl von Betätigungshebeln umfassen, die in Umfangsrichtung miteinander gekoppelt sein können, so dass durch diese Kraftbeaufschlagungsanordnung 26, die radial außen am Gehäuse 14 abgestützt ist und radial weiter innen die Anpressplatte 18 beaufschlagt, kein eigener Einrückkraftbeitrag geliefert wird. Vielmehr wird die Einrückkraft bereitgestellt durch eine durch einen Kraftpfeil F symbolisierte Aktuatoranordnung, die über ein Drehentkopplungslager 28 den radial inneren Bereich der Kraftbeaufschlagungsanordnung 26 beaufschlagt, um diese zur Durchführung von Einkoppelvorgängen in Richtung auf die Schwungmasse 16 zu zu pressen und dabei in entsprechender Weise auch die Anpressplatte 18 zu belasten. Zur Durchführung von Auskuppelvorgängen kann die symbolisch dargestellte Aktuatoranordnung F eine in entgegengesetzter Richtung gerichtete Kraft erzeugen und somit die Kraftbeaufschlagungsanordnung 26 in Richtung von der Schwungmasse 16 wegziehen. Dieser ziehenden Bewegung kann die Anpressplatte 18 beispielsweise unter der Krafteinwirkung der angesprochenen Tangentialblattfedern oder einer sonstigen Lüftfederung folgen.

Grundsätzlich ist es jedoch auch möglich, bei derartigen Kupplungen des Normal-Offen-Typs einen Anteil der erforderlichen Einrückkraft auch durch die Kraftbeaufschlagungsanordnung selbst bereitzustellen. In diesem Falle kann diese beispielsweise nach Art einer Membranfeder ausgestaltet sein, die eine definierte Vorlast bereitstellt und die Anpressplatte 18 in Richtung Einkuppeln, also in Richtung Schwungmasse 16, belastet. Die zum vollständigen Einrücken der Kupplung 10, also zum Erzielen des gewünschten Kupplungsmoments, noch zusätzlich erforderliche Kraft wird dann durch die Aktuatoranordnung F bereitgestellt. Um bei einem derartigen in Richtung Einkuppeln grundsätzlich vorgespannten Aufbau auch den gewünschten Normal-Offen-Zustand erlangen zu können, greift die Aktuatoranordnung F zum Ausrücken wieder radial innen ziehend an der Kraftbeaufschlagungsanordnung 26 an, wobei diese aufgrund ihrer Vorspannung in Richtung Einrücken nunmehr radial außen auch in der anderen axialen Richtung am Gehäuse 14 abgestützt ist.

Die in der Fig. 1 dargestellte Kupplung 10 umfasst weiterhin eine allgemein mit 30 bezeichnete Verschleißkompensationsanordnung. Diese Verschleißkompensationsanordnung 30 wiederum umfasst einen Verschleißnachstellbereich 32 sowie einen Verschleißerfassungsbereich 34.

Der Verschleißnachstellbereich 32 weist im hier dargestellten Beispiel zwei Verschleißnachstellelemente 36, 38 in Form von Nachstellringen auf. Diese beiden Nachstellringe 36, 38 liegen axial im Bereich daran vorgesehener Rampenflächen aneinander an. Der Nachstellring 36 liegt weiterhin an der Anpressplatte an, während der Nachstellring 38 durch die Kraftbeaufschlagungsanordnung 26 beaufschlagt wird. Somit wird die Einrückkraft über diesen Verschleißnachstellbereich 32, d.h. die beiden Nachstellringe 36, 38 desselben, in die Anpressplatte 18 eingeleitet. Durch eine Vorspannfeder 40 sind die beiden Nachstellringe 36, 38 grundsätzlich zur Drehung bezüglich einander in Umfangsrichtung um die Drehachse A vorgespannt, wobei diese Vorspannung bewirkt, dass die beiden Ringe 36, 38 die Tendenz haben, durch Abgleiten an ihren Rampenflächen ihre Gesamtaxialausdehnung zu vergrößern. Es sei darauf hingewiesen, dass selbstverständlich auch nur ein derartiger Ring vorgesehen sein kann, der dann an entsprechenden Flächen der Anpressplatte 18 bei Drehung in Umfangsrichtung abgleiten kann.

Der Verschleißerfassungsbereich 32 umfasst im dargestellten Beispiel einen so genannten Spielgeber 42. Ein bolzenartiger Erfassungsabschnitt 44 desselben durchsetzt die Anpressplatte 18 in axialer Richtung und erstreckt sich radial außerhalb der Reibbeläge 20 der Kupplungsscheibe 22 in Richtung auf die Schwungmasse 16 zu. Ein Blockierabschnitt 46 des Spielgebers 42 erstreckt sich an der von der Kupplungsscheibe 22 abgewandten Rückseite der Anpressplatte 18 nach radial innen und greift in eine Aussparung 48 des Nachstellrings 38 ein. Durch die Tendenz der Nachstellringe 36, 38, bedingt durch die Federvorspannung sich so zu verlagern, dass ihre Gesamtaxialabmessung zunimmt, beaufschlagt bei Freigabe dieses Verschleißnachstellbereichs 32 der Nachstellring 38 den Blockierabschnitt 46 und führt zu einer Verkippung des gesamten Spielgebers 42 in der ihn aufnehmenden Öffnung in der Anpressplatte 18. Somit ist grundsätzlich ein Zustand vorhanden, in dem der Spielgeber 42 in Reibungsklemmsitz in der Anpressplatte 18 gehalten bzw. vorgespannt ist, so dass auch dann, wenn die Kraftbeaufschlagungsanordnung 26 die Anpressplatte 18 nicht über den Verschleißnachstellbereich 32 beaufschlagt, eine Verlagerung des Spielgebers 42 bezüglich der Anpressplatte nicht auftreten wird und somit auch die Nachstellringe 36, 38 sich nicht in Umfangsrichtung weiter verdrehen und ihre Gesamtaxialabmessung vergrößern können.

Grundsätzlich ist die Funktionsweise derartiger Verschleißkompensationsanordnungen 30 so, dass bei Durchführung von Einkuppelvorgängen und dabei auftretender Verlagerung der Anpressplatte 18 mit der gesamten Verschleißkompensationsanordnung 30 auf die Schwungmasse 16 zu der Erfassungsabschnitt 44 sich der Oberfläche der Schwungmasse 16 annähert. Ist kein Verschleiß vorhanden, so wird im vollständig eingerückten Zustand der Erfassungsabschnitt 44 die Schwungmasse 16 praktisch nicht berühren. Ist ein Verschleiß aufgetreten, was eine Dickenabnahme der Reibbeläge 20 zur Folge hat, so kommt noch vor Erreichen der vollständig eingerückten Kupplungsstellung der Erfassungsabschnitt 44 zur Anlage an der Schwungmasse 16. Bedingt durch die auf die Anpressplatte 18 wirkende Einrückkraft wird der Reibungsklemmsitz aufgehoben und der gesamte Spielgeber 42 verschiebt sich axial bezüglich der Anpressplatte 18. Dabei hebt auch der Blockierabschnitt 46 in einem dem aufgetretenen Verschleiß entsprechenden Ausmaß vom Nachstellring 38 ab. Da dieser im Einrückzustand jedoch nur unter der Beaufschlagung der Kraftbeaufschlagungsanordnung 26 steht, wird zunächst keine Verschleißkompensation auftreten. Erst beim nächsten Ausrückvorgang, wenn die Kraftbeaufschlagungsanordnung 26 die Anpressplatte 18 nicht mehr oder nicht mehr so stark beaufschlagt, reicht die Vorspannwirkung der Feder 40 aus, um dann die beiden Ringe 36, 38 bezüglich einander zu verdrehen, und zwar so lange, bis der Ring 38 wieder an dem Blockierabschnitt 46 des Spielgebers 42 anstößt. Es ist dann exakt dasjenige Ausmaß an Verschleiß kompensiert worden, das zuvor durch axiale Verschiebung des Spielgebers 42 bezüglich der Anpressplatte 18 erfasst worden ist.

Es sei bereits hier darauf hingewiesen, dass selbstverständlich die Verschleißkompensationsanordnung 30 in verschiedensten Formen aufgebaut sein kann. Dies wird auch aus den nachfolgend noch beschriebenen Ausgestaltungsvarianten deutlich. Von Bedeutung ist, dass im Kupplungsbetrieb Komponenten sich bezüglich einander verlagern und das Ausmaß dieser Verlagerung davon abhängen wird oder abhängen kann, ob bzw. in welchem Ausmaß Verschleiß aufgetreten ist. So verlagert sich selbstverständlich auch die Kraftbeaufschlagungsanordnung 26 bei Auftreten von Verschleiß stärker in Richtung auf die Schwungmasse 16 zu, wenn die Anpressplatte 18 in ihre vollständig eingerückte bzw. maximal axial auf die Schwungmasse 16 zu verschobene Lage gebracht wird. Auch diese Bewegung kann beispielsweise bezüglich des Gehäuses 14 erfasst werden.

Die Kupplungsscheiben 22, die bei derartigen Kupplungen 10 eingesetzt werden, weisen im Bereich der Reibbeläge 20 im Allgemeinen eine Belagsfederung auf. Auf diese Art und Weise wird eine für das gesamte Kupplungsverhalten günstige axiale Elastizität im Bereich der Reibbeläge 20 bereitgestellt. Diese axiale Elastizität hat zur Folge, dass je nach Stärke der vorhandenen Einrückkraft die Kupplungsscheibe 22 im Bereich ihrer Reibbeläge 20 mehr oder weniger stark axial komprimiert ist und entsprechend auch dem erreichten Einfederungsausmaß der Belagsfederung eine variierende axiale Dicke haben wird.

Während bei Kupplungen des Normal-Geschlossen-Typs, welche beispielsweise mit einer Membranfeder als Kraftspeicher arbeiten, davon ausgegangen wird, dass immer dann, wenn der Einkuppelzustand vorliegt, die Anpressplatte in maximalem Ausmaß auf das Widerlager zu verschoben ist und somit auch die maximale Kompression im Bereich der Reibbeläge vorhanden ist, was bedeutet, dass dann auch immer ein definierter Zustand zur Verschleißerfassung erlangt ist, wird bei Kupplungen des Normal-Offen-Typs so gearbeitet, dass die auf die Anpressplatte 18 einwirkende Einrückkraft so gewählt wird, dass damit das erforderliche oder zu übertragende Drehmoment übertragen werden kann. Das heißt, ist nur ein vergleichsweise geringes Drehmoment zu übertragen, wird auch eine entsprechend abgesenkte Einrückkraft erzeugt. Dies mindert die Belastung der Aktuatoranordnung F, genauso wie die Belastung verschiedener im Kraftübertragungsweg liegender oder Kräfte aufnehmender Lager. Die Folge davon ist jedoch, dass bei geringeren Einrückkräften davon auszugehen ist, dass die im Bereich der Kupplungsscheibe 22 vorhandene Belagsfederung noch nicht im maximal möglichen Ausmaß eingefedert ist. Dies bedeutet, dass die in einem derartigen Zustand vorhandene Lage der Anpressplatte 18 beispielsweise bezüglich der Schwungmasse 16 kein sicherer Indikator dafür ist, ob bzw. in welchem Ausmaß Verschleiß aufgetreten ist, da eine Lagevariation im Einrückzustand nicht nur durch Dickenabnahme der Reibbeläge 20 vorhanden ist, sondern auch ggf. durch noch nicht vollständig eingefederte Belagsfederung. Dies kann dazu führen, dass, obgleich Verschleiß aufgetreten ist, in Zuständen, in welchen nur vergleichsweise geringe Einrückkräfte erforderlich sind, die Anpressplatte 18 mit dem Spielgeber 42 nicht so weit verschoben wird, dass dieser überhaupt oder in einem den tatsächlich aufgetretenen Verschleiß wiedergebenden Ausmaß verschoben wird und dann beim nachfolgenden Ausrückvorgang eine entsprechende Kompensation auslöst. Es wird entweder gar keine Verschleißkompensation oder eine Unterkompensation stattfinden.

Um diesem Problem entgegenzutreten, ist gemäß der vorliegenden Erfindung vorgesehen, dass unabhängig von der für den normalen Kupplungsbetrieb bereitzustellenden Einrückkraft zu bestimmten Zeiten durch die Aktuatoranordnung F eine derartige Einrückkraft bereitgestellt wird, dass die Anpressplatte 18 definiert in einen Zustand gelangt, der das korrekte und vollständige Erfassen des zu diesem Zeitpunkt dann insgesamt aufgetretenen Verschleißes ermöglicht. So kann beispielsweise vorgesehen sein, dass nach einer vorbestimmten Anzahl an insgesamt durchgeführten Kupplungsbetätigungsvorgängen zwangsweise nicht nur die tatsächlich für das zu übertragende Moment erforderliche Einrückkraft erzeugt wird, sondern beispielsweise die durch die Aktuatoranordnung F maximal erzeugbare Einrückkraft bereitgestellt wird. Dies hat zur Folge, dass die Anpressplatte 18 dann so weit verschoben wird, dass auch die Belagsfederung der Reibbeläge 20 in einem definierten, beispielsweise maximalen Ausmaß, komprimiert ist und somit bei Auftreten von Verschleiß der Spielgeber 42 durch Anstoßen an der Schwungmasse 16 wiederum bezüglich der Anpressplatte 18 so verschoben wird, dass nachfolgend auch ein entsprechender Verschleißkompensationsvorgang durchgeführt wird. Dieses zwangsweise Bringen der Kupplung in eine Verschleißerfassungs-Betätigungsstellung kann dann beispielsweise beim Starten des Systems vorgenommen werden, also in einer Phase, in welcher bei beispielsweise nicht eingelegtem Gang das Schließen der Kupplung nicht schädlich ist. Als Parameter für das Durchführen eines derartigen Verschleißerfassungsvorgangs kann aber beispielsweise auch die über die Kupplungslebensdauer hinweg akkumulierte Reibarbeit erfasst werden. Dies kann unter Berücksichtigung des in der Kupplung aufgetretenen Schlupfs und der anliegenden Kräfte bzw. Momente errechnet werden, so dass auch hier periodisch nach bestimmten Reibarbeitsintervallen jeweils ein Erfassungsvorgang und entsprechend dann ggf. Kompensationsvorgang durchgeführt wird. Auch die akkumulierte und über die Kupplung übertragene Energie kann als Indikator dienen. Weiterhin ist es möglich, die gesamte Fahrstrecke, die mit einer derartigen Kupplung zurückgelegt worden ist, zu erfassen, wobei z.B. durch Ermittlung im Versuch ein sinnvoller Zusammenhang geschaffen werden kann, zwischen einer Fahrstrecke und der dabei auftretenden Anzahl an Betätigungsvorgängen bzw. dem dabei auftretenden Ausmaß an Verschleiß. Neben den vorangehend angegebenen Größen als Referenzgrößen könnte beispielsweise auch die abgelaufene Zeit seit der letzten Verschleißkompensation oder seit der ersten Inbetriebnahme als Indikator dafür verwendet werden, wann eine derartige Erfassung und Kompensation wieder durchzuführen ist.

Bei der Durchführung dieser Verschleißerfassung, also zum Bringen der Kupplung in die Verschleißerfassungs-Betätigungsstellung, kann, wie bereits angeführt, die Aktuatoranordnung F so angesteuert werden, dass sie die maximal mögliche Betätigungskraft erzeugt. Hier ist es aber auch möglich, die Ansteuerung so vorzunehmen, dass der Verstellweg sensiert wird. Im Falle einer hydraulischen Betätigungskraftübertragung kann auch der aufgebaute Betätigungsdruck eine beobachtbare Größe dafür liefern, wann die Verschleißerfassungs-Betätigungsstellung vorliegt.

Alternativ zu der vorangehend angesprochenen in bestimmten Intervallen vorzunehmenden Durchführung der Verschleißerfassung, ist es auch möglich, bei jedem Betätigungsvorgang der Reibungskupplung auch diese Maßnahme zu ergreifen. So kann beispielsweise beim Einrücken der Kupplung diese dann, wenn kein Schlupf mehr vorhanden ist, also an sich eine ausreichende Einrückkraft anliegt, noch weiter verstellt werden, beispielsweise bis zum Erreichen der maximal möglichen oder zulässigen Einrückkraft. Auch hier kann dann für eine vorgegebene Zeitdauer in dem Verschleißerfassungszustand verharrt werden und nachfolgend dann die Einrückkraft wieder gesenkt werden, und zwar auf das Niveau, das für diesen Einrückvorgang bzw. das momentan zu übertragende Moment geeignet ist. Auch während die Kupplung 10 mit einer für das momentan zu übertragenden Drehmoment ausgewählten Einrückkraft eingerückt gehalten ist, kann kurzzeitig, ggf. auch in periodischen Abständen, die Einrückkraft erhöht werden, um die Verschleißerfassungs-Betätigungsstellung zu erreichen, so dass nach dem Erfassen eines ggf. aufgetretenen Verschleißes durch Absenken der Einrückkraft wieder das vorher anliegende oder für den momentan dann vorliegenden Zustand geeignete Niveau der Einrückkraft bereitgestellt wird.

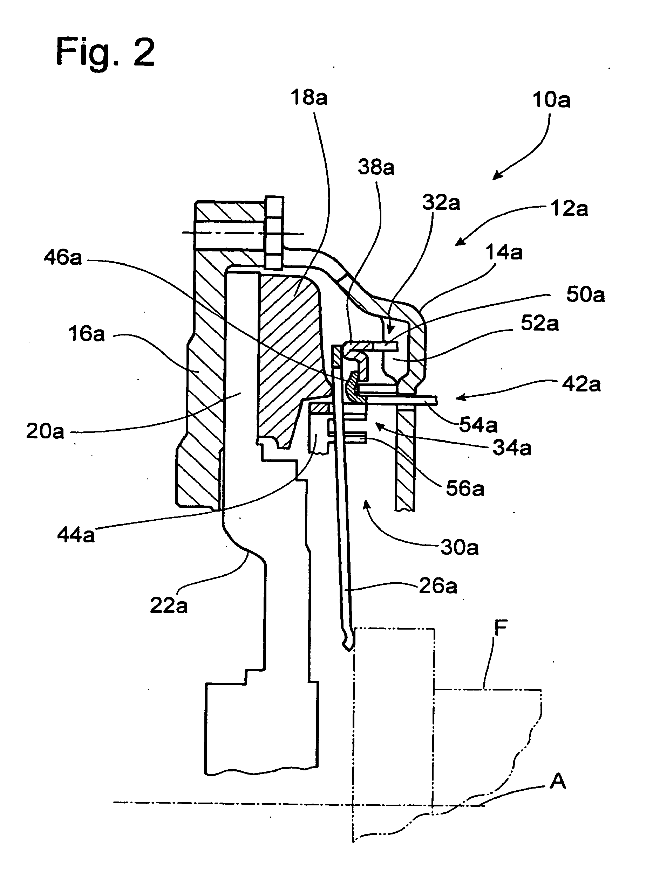

In Fig. 2 ist eine alternative Ausgestaltungsart einer Reibungskupplung dargestellt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet.

Während bei der in Fig. 1 gezeigten Ausgestaltungsform der Verschleißnachstellbereich der Verschleißkompensationsanordnung im Kraftübertragungsweg zwischen der Kraftbeaufschlagungsanordnung und der Anpressplatte positioniert ist, liegt bei der in Fig. 2 gezeigten Ausgestaltungsform der Verschleißnachstellbereich 32a im Einrückreaktionskraftabstützweg. Das heißt, die Kraftbeaufschlagungsanordnung 26a, also beispielsweise ein Betätigungshebelsystem, eine Membranfeder o.dgl., stützt sich über den Verschleißnachstellbereich 32a am Gehäuse 14a ab.

Der Verschleißnachstellbereich 32a umfasst hier nur einen einzigen Nachstellring 38a, an welchem radial außen die Kraftbeaufschlagungsanordnung 26a abgestützt ist, beispielsweise mit einem Ringbereich derselben. Der Nachstellring 38a und das Gehäuse 14a sind mit jeweiligen Rampenflächen 50a, 52a ausgestaltet, und durch eine hier nicht dargestellte Feder ist der Nachstellring 38a zur Bewegung in Umfangsrichtung vorgespannt. Diese Vorspannung ist so gewählt, dass bei Freigabe des Nachstellrings 38a durch gegenseitiges Abgleiten der Flächen 50a, 52a aneinander der Nachstellring 38a sich axial bezüglich des Gehäuses 14a in Richtung auf die Schwungmasse 16a zu verlagert, also auch in einer Richtung, in welcher die Anpressplatte 18a sich bei Auftreten von Verschleiß im Bereich der Reibbeläge 20a im maximal eingerückten Zustand bewegt.

Der Spielgeber 42a ist wiederum mit einem Blockierabschnitt 46a ausgebildet, hier beispielsweise einem ringartigen Bereich, der über mehrere axial sich von dem ringartigen Blockierabschnitt 46a weg erstreckende Führungsstege 50a am Gehäuse 14a unter Reibung geführt ist, so dass eine Verlagerung des Spielgebers 42a ohne äußere Krafteinwirkung praktisch nicht auftreten wird. Mit dem Blockierabschnitt 46a ist ein beispielsweise ebenfalls ringartiger Erfassungsabschnitt 44a über mehrere Verbindungsstege 56a verbunden. Dabei können diese Verbindungsstege 56a durch die Umfangsaussparungen zwischen einzelnen Hebelabschnitten der Kraftbeaufschlagungsanordnung 26a hindurchgreifen. Insbesondere ist hier die Reibeinspannung derart gewählt, dass die auf den Nachstellring 38a einwirkende Vorspannkraft nicht ausreichen wird, um durch Umfangsverlagerung und somit auch Axialverlagerung des Nachstellrings 38a den gesamten Spielgeber 42a zu verschieben.

Tritt bei derartigen Kupplungen 10a ein Verschleiß der Reibbeläge 20a auf, und wird durch entsprechend starke Einrückkrafterzeugung die Anpressplatte 18a axial verlagert, so verschwenkt auch die Kraftbeaufschlagungsanordnung 26a verstärkt, wie vorangehend bereits geschildert, was zur Folge hat, dass über den Erfassungsabschnitt 44a auch der Blockierabschnitt 46a bzw. der gesamte Spielgeber 42a sich verschieben wird. Dabei hebt der Blockierabschnitt 46a vom Nachstellring 38a ab. Da in diesem Zustand der Nachstellring 38a zur Reaktionskraftabstützung bezüglich des Gehäuses 14a dient, kann er sich auch nicht in Umfangsrichtung verdrehen.

Erst bei Durchführen eines Auskuppelvorgangs, wenn die Beaufschlagung des Nachstellrings 38a dann bei entsprechender Absenkung der Einrückkraft abnimmt, kann diese Verlagerung in Umfangsrichtung auftreten, und zwar so lange, bis die dabei auch induzierte Axialverschiebung des Nachstellrings 38a so groß ist, dass er am Blockierabschnitt 46a anstößt. Auf diese Art und Weise kann wieder der zuvor erfasste Verschleiß kompensiert werden.

Um insbesondere bei einem derartigen System eine Zurückverlagerung des Spielgebers 42a, möglicherweise durch Kontakt mit der Kraftbeaufschlagungsanordnung 26a bei Durchführen eines Auskuppelvorgangs, zu vermeiden, kann ein keilartiger Arretierschieber 58a vorgesehen sein. Dieser durch eine nicht dargestellte Feder in Umfangsrichtung vorgespannte Arretierschieber 58a drängt in den Zwischenraum zwischen dem Gehäuse 14a und dem Blockierabschnitt 46a. Immer dann, wenn der Spielgeber 42a sich verschleißinduziert axial verlagert, wird der zunehmende axiale Zwischenraum zwischen dem Gehäuse 14a und dem Blockierabschnitt 46a sofort von dem Arretierschieber 58a ausgefüllt, so dass der Spielgeber 46a sich nicht axial zurückbewegen kann.

Auch bei dieser Ausgestaltungsform einer Kupplung des Normal-Offen-Typs kann die vorangehend beschriebene erfindungsgemäße Prozedur vorgenommen werden. Es kann also entweder bei jedem Einkuppelvorgang oder zu bestimmten vorgegebenen Zeiten oder Intervallen die Anpressplatte 18a so weit gepresst werden, dass sie in einer definierten Betätigungsstellung ist, in welcher eine zuverlässige Erfassung des aufgetretenen Verschleißes möglich ist. Auch dies kann wieder die Lage mit maximal möglicher axialer Verschiebung und dabei maximaler Kompression der Belagsfederung sein, wie vorangehend dargelegt. Es kann diesbezüglich auf die ausführlichen Ausführungen zur Ausgestaltungsform gemäß Fig. 1 verwiesen werden.

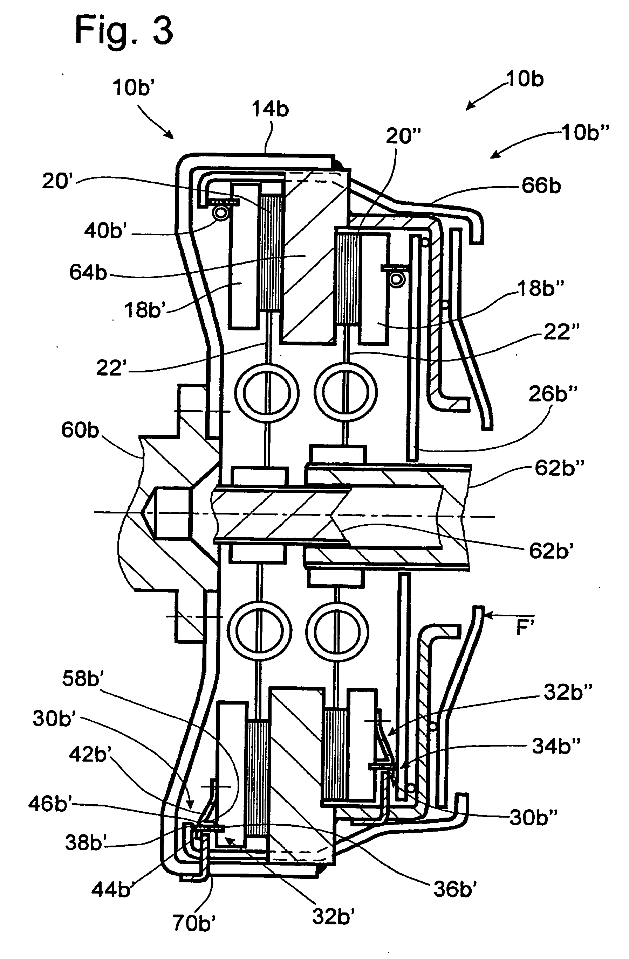

Eine weitere Reibungskupplung, bei welcher die erfindungsgemäße Prozedur Anwendung finden kann, ist in Fig. 3 gezeigt. Auch hier bezeichnen gleiche Bezugszeichen unter Hinzufügung eines Anhangs "b" gleiche Baugruppen. Man erkennt, dass hier eine Kupplung 10b mit zwei Kupplungsbereichen 10b' und 10b" vorgesehen ist. Diese Doppelkupplung dient dazu, um das Antriebsdrehmoment von einer Antriebswelle 60b auf zwei zueinander koaxial liegende Abtriebswellen 62b' und 62b" zu übertragen.

Jeder der Kupplungsbereiche 10b' und 10b" umfasst eine Anpressplatte 18b', 18b", die in einer allgemein mit 14b bezeichneten Gehäuseanordnung aufgenommen und bezüglich dieser drehfest und axial verlagerbar gehalten sind. Axial zwischen den beiden Anpressplatten 18b' und 18b" liegt eine über die Gehäuseanordnung 14b mit der Antriebswelle 60b zur Drehung verbundene und nunmehr für beide Kupplungsbereiche 10b' und 10b" das Widerlager bereitstellende Zwischenplatte 64b.

Eine Kraftbeaufschlagungsanordnung 26b' des Kupplungsbereichs 10b' leitet eine Betätigungskraft über eine Kraftübertragungsbaugruppe 66b und den Verschleißnachstellbereich 32b' einer Verschleißkompensationsanordnung 30b' in die Anpressplatte 18b' ein. Eine Kraftbeaufschlagungsanordnung 26b" leitet in entsprechender Weise eine Einrückkraft über einen Verschleißnachstellbereich 32b" einer Verschleißkompensationsanordnung 30b" in die Anpressplatte 18b" ein. Die beiden Kraftbeaufschlagungsanordnungen 26b' und 26b" können zur Erzeugung zumindest eines Teils der erforderlichen Einrückkraft wieder durch nur symbolisch dargestellte Aktuatoranordnungen F' und F" beaufschlagt werden.

Jeder der Kupplungsbereiche 10b' und 10b" umfasst ferner eine Kupplungsscheibe 22b' bzw. 22b", deren Reibbeläge 20b' bzw. 20b" jeweils zwischen der zugehörigen Anpressplatte 18b' oder 18b" und der Zwischenplatte 64b einspannbar sind.

Die beiden in Fig. 3 erkennbaren Verschleißkompensationsanordnungen 30b' und 30b" sind grundsätzlich von gleichem Aufbau, so dass nachfolgend nur die bei dem Kupplungsbereich 10b' vorhandene Verschleißkompensationsanordnung 30b' detaillierter beschrieben wird.

Der Verschleißnachstellbereich 32b' umfasst wieder zwei Nachstellringe 36b' und 38b'. Der Nachstellring 36b' ist an der Anpressplatte 18b' abgestützt, während der Nachstellring 38b' durch die Kraftübertragungsbaugruppe 66b' beaufschlagt wird. Durch eine Vorspannfeder 40b' wird wieder eine die beiden Nachstellringe 36b' und 38b' in Umfangsrichtung bezüglich einander vorspannende Kraft erzeugt. Auch hier weisen diese Nachstellringe 38b' und 38b' wieder die vorangehend angesprochenen Rampenflächen auf.

Ein beispielsweise als Blattfederelement ausgestalteter Spielgeber 42b' ist radial innerhalb der Nachstellringe 38b' und 36b' an der Anpressplatte 18b' festgelegt und greift durch eine Aussparung des Nachstellrings 38b' hindurch nach radial außen und überlappt dort einen gehäusefesten Anschlag 70b mit einem Erfassungsabschnitt 44b'. Ein Blockierabschnitt 46b' liegt im Bereich des Nachstellrings 38b'. Der Spielgeber 42b' ist so aufgebaut, dass die durch diesen selbst bereitgestellte Federkraft ausreicht, um einer Verdrehung der beiden Nachstellringe 38b' und 36b' gegen einander entgegenzuwirken.

Tritt bei dem Kupplungsbereich 10b' Verschleiß auf, so hat dies zur Folge, dass in der beispielsweise mit maximaler Kraft erzeugten Einrückstellung die Anpressplatte 18b' näher an die Zwischenplatte 64b heranrückt. Dabei kommt der Erfassungsabschnitt 44b' in Anlage am Anschlag 70b' und der Blockierabschnitt 46b' hebt vom Nachstellring 38b' ab. Da dabei der Spielgeber 42b' beispielsweise im Bereich des Blockierabschnitts 46b' sich in einem dem Verschleiß entsprechenden Ausmaß von der Anpressplatte 18b' entfernt, hat ein keilartiger Arretierschieber 58b' wieder die Möglichkeit, in den vergrößerten Zwischenraum einzudringen. Hierzu kann dieser keilartige Arretierschieber 58b' wieder in Umfangsrichtung vorgespannt sein. Beim nachfolgenden Wiederausrücken des Kupplungsbereichs 10b' wird somit verhindert, dass der Spielgeber 42b' wieder in seine Anfangslage zurückgelangt, bevor eine das Durchführen einer Verschleißkompensation zulassende Absenkung der Einrückkraft erfolgt ist. Der Spielgeber 42b' verbleibt also in dieser Phase in der zuvor verschleißbedingt eingenommenen Auslenklage bezüglich der Anpressplatte 18b', obgleich er vom gehäusefesten Anschlag 70b' abhebt. Ist die Einrückkraft so weit abgesunken, dass die durch die Feder 40b' bereitgestellte Vorspannkraft ausreicht, die beiden Nachstellringe 38b' und 36b' bezüglich einander zu drehen, wird diese Drehung auftreten, und zwar so lange, bis der Nachstellring 38b' wieder am Blockierabschnitt 46b' des Spielgebers 42b' anstößt.

Auch bei einer derartigen Reibungskupplung 10b kann in beiden Kupplungsbereichen 10b' und 10b" die erfindungsgemäße Prozedur vorgenommen werden, um selbst dann, wenn im normalen Einrückzustand nicht die maximal mögliche Verlagerung der jeweiligen Anpressplatte 18b' und 18b" auf die Zwischenplatte 64b zu auftritt, zu gewissen Zeiten definitiv eine derartige maximale Verlagerung zu erzwingen und dabei definiert auch eine Verschleißerfassung und danach eine Verschleißkompensation zu ermöglichen.

Die vorangehenden Ausführungen zeigen, dass die erfindungsgemäße Prozedur praktisch unabhängig davon, wie eine Verschleißkompensationsanordnung ausgestaltet ist, durchgeführt werden kann, um auch bei einer Kupplung oder einem Kupplungsbereich des Normal-Offen-Typs zumindest nach vorgebbaren Gebrauchsintervallen dafür zu sorgen, dass eine Verschleißkompensation in einem definierten Ausmaß durchgeführt wird, während in anderen Phasen keine oder möglicherweise eine Verschleißkompensation mit zu geringem Ausmaß auftreten kann. Es sei noch einmal betont, dass selbstverständlich die verschiedenen Konzepte der Verschleißkompensationsanordnungen, wie sie vorangehend dargestellt worden sind, auch bei jeweils anderen der Reibungskupplungen vorgesehen sein können. Auch können andere Kupplungsarten, wie z.B. Mehrscheibenkupplungen, mit dem Erfindungsprinzip arbeiten.

## Patentansprüche

1. Verfahren zum Betätigen eines automatisierten Kupplungssystems des Normal-Offen-Typs, welches Kupplungssystem wenigstens einen Kupplungsbereich (10; 10a; 10b', 10b") mit einer durch ein Einrückkrafterzeugungssystem (F; F', F") beaufschlagbaren Anpressplatte (18; 18a; 18b', 18b"), einem Widerlager (16; 16a; 64b) und einer zwischen der Anpressplatte (18; 18a; 18b', 18b") und dem Widerlager (16; 16a; 64b) einspannbaren Kupplungsscheibenanordnung (20; 20a; 20b', 20b") umfasst, wobei das Einrückkrafterzeugungssystem (F; F', F") eine Aktuatoranordnung (F; F', F") aufweist, welche wenigstens einen Teil der zum Beaufschlagen der Anpressplatte (18; 18a; 18b', 18b") erforderlichen Einrückkraft bereitstellt, ferner umfassend eine Verschleißkompensationsanordnung (30; 30a; 30b', 30b") mit einem Verschleißerfassungsbereich (34; 34a; 34b', 34b") und einem Verschleißnachstellbereich (32; 32a; 32b', 32b"), wobei der Verschleißerfassungsbereich (34; 34a; 34b'. 34b") wenigstens ein Verschleißerfassungselement (42; 42a; 42b') umfasst, das bei Auftreten von Verschleiß in Verschleißerfassungsanlage an einem Verschleißerfassungsgegenelement (16; 26a; 70b') bringbar ist, wobei das Verfahren die folgenden Maßnahmen umfasst:
a) für den Drehmomentübertragungsbetrieb Erzeugen einer Betriebs-Einrückkraft oder/und Durchlaufen eines Betriebs-Einrückweges in Abhängigkeit von einem über einen Kupplungsbereich (10; 10a; 10b', 10b") zu übertragenden Drehmoment oder einer in Zusammenhang damit stehenden Größe,
b) für einen Verschleißkompensationsbetrieb Erzeugen einer Verschleißkompensations-Einrückkraft, welche eine maximale Einrückverlagerung der Anpressplatte (18; 18a; 18b', 18b") bewirkt, zum Bringen des Kupplungsbereichs (10; 10a; 10b', 10b") in eine Verschleißerfassungs-Einrückbetätigungsstellung und dabei Bringen des Verschleißerfassungselements (42; 42a; 42b') durch die Anlage an dem Verschleißerfassungsgegenelement (16; 26a; 70b) in eine den aufgetretenen Verschleiß repräsentierende Lage, welche dem Verschleißnachstellbereich (32; 32a; 32b'; 32b") die Durchführung eines Verschleißnachstellvorgangs ermöglicht.

2. Verfahren nach Anspruch 1,
**dadurch gekennzeichnet, dass** bei Durchführung der Maßnahme a) eine Einrückkraft erzeugt wird, welche in dem Kupplungsbereich (10; 10a; 10b', 10b") die Bereitstellung eines Kupplungsmomentes bewirkt, das im Bereich des über den Kupplungsbereich (10; 10a; 10b'. 10b") zu übertragenden Drehmomentes liegt.

3. Verfahren nach Anspruch 1 oder 2,
**dadurch gekennzeichnet, dass** bei Durchftührung, der Maßnahme b) als Verschleißkompensation-Einrückraft eine von dem Einrückkrafterzeugungssytem (F; F', F") maximal erzeugbare Einrückkraft bereitgestellt wird.

4. Verfahren nach einem der Ansprüche 1 bis 3,
**dadurch gekennzeichnet, dass** ein Verschleißkompensationsparameter bestimmt wird und mit einer Referenzgröße verglichen wird, wobei dann, wenn im Wesentlichen Übereinstimmung zwischen dem Verschleißkompensationsparameter und der Referenzgröße besteht, die Maßnahme b) durchgeführt wird.

5. Verfahren nach Anspruch 4,
**dadurch gekennzeichnet, dass** der Verschleißkompensationsparameter die Anzahl an durchgeführten Kupplungsbetätigungsvorgängen repräsentiert.

6. Verfahren nach Anspruch 4 oder 5,
**dadurch gekennzeichnet, dass** der Verschleißkompensationsparameter die in einem Kupplungsbereich aufgebrachte Reibarbeit repräsentiert.

7. Verfahren nach einem der Ansprüche 4 bis 6,
**dadurch gekennzeichnet, dass** der Verschleißkompensationsparameter die über den Kupplungsbereich (10; 10a; 10b', 10b") übertragene Energie repräsentiert.

8. Verfahren nach einem der Ansprüche 4 bis 7,
**dadurch gekennzeichnet, dass** der Verschleißkompensatonsparameter die mit einem Fahrzeug zurückgelegte Entfernung repräsentiert.

9. Verfahren nach einem der Ansprüche 4 bis 5.
**dadurch gekennzeichnet, dass** der Verschleißkompensationsparameter die verstrichene Zeit repräsentiert.

10. Verfahren nach einem der Ansprüche 1 bis 9,
**dadurch gekennzeichnet, dass** die Maßnahme b) bei jeder Durchführung der Maßnahme a) durchgeführt wird.

11. Verfahren nach Anspruch 10,
**dadurch gekennzeichnet dass** nach Durchführung der Maßnahme b) die zur Durchführung der Maßnahme a) für diesen Einkuppelvorgang bestimmte Einrückkraft oder/und der bestimmte Eindrückweg bereitgestellt wird.

12. Verfahren nach einem der Ansprüche 1 bis 11,
**dadurch gekennzeichnet, dass** der Verschleißnachstellbereich (32; 32a, 32b', 32b") im Einrückkraftübertragungsweg zur Anpressplatte (18; 18a; 18b', 18b") oder/und im Einrückreaktionskraftabstützweg wenigstens ein nach Auftreten und Erfassen von Verschleiß vertagerbares Verschleißnachstellelement (36; 38; 36a, 38a; 36b', 38b') umfasst.

## Claims

1. Method for actuating an automated clutch system of normally-open type, which clutch system comprises at least one clutch region (10; 10a; 10b', 10b") with a pressure plate (18; 18a; 18b', 18b") that can have load exerted on it by an engagement-force generating system (F; F', F"), with a counter bearing (16; 16a; 64b) and with a clutch disc arrangement (20; 20a; 20b', 20b") that can be clamped between the pressure plate (18; 18a; 18b', 18b") and the counter bearing (16; 16a; 64b), wherein the engagement-force generating system (F; F', F") has an actuator arrangement (F; F', F") which provides at least a part of the engagement force required for the exertion of load on the pressure plate (18; 18a; 18b', 18b"), also comprising a wear compensation arrangement (30; 30a; 30b', 30b") with a wear detection region (34; 34a; 34b', 34b") and a wear-compensation readjustment region (32; 32a; 32b', 32b"), wherein the wear detection region (34; 34a; 34b', 34b") comprises at least one wear detection element (42; 42a; 42b') which, in the event of wear occurring, can be brought into wear-detecting contact with a wear detection counterpart element (16; 26a; 70b'), wherein the method comprises the following measures:
a) for torque-transmission operation, generating an operational engagement force and/or traversing an operational engagement path as a function of a torque to be transmitted via a clutch region (10; 10a; 10b', 10b") or as a function of a variable related to said torque,
b) for wear-compensation operation, generating a wear compensation engagement force, which effects a maximum engagement displacement of the pressure plate (18; 18a; 18b', 18b"), in order to place the clutch region (10; 10a; 10b', 10b") into a wear detection engagement actuation position, and in so doing, place the wear detection element (42; 42a; 42b'), as a result of the contact with the wear detection counterpart element (16; 26a; 70b), into a position which is representative of the wear that has occurred and which allows the wear-compensation readjustment region (32; 32a; 32b', 32b") to perform a wear-compensation readjustment process.

2. Method according to Claim 1,
**characterized in that**, during the execution of measure a), an engagement force is generated which, in the clutch region (10; 10a; 10b', 10b"), effects the provision of a clutch torque that lies in the region of the torque to be transmitted via the clutch region (10; 10a; 10b', 10b").

3. Method according to Claim 1 or 2,
**characterized in that**, during the execution of measure b), a maximum engagement force that can be generated by the engagement-force generating system (F; F', F") is provided as a wear compensation engagement force.

4. Method according to one of Claims 1 to 3,
**characterized in that** a wear compensation parameter is determined and compared with a reference variable, wherein measure b) is executed if the wear compensation parameter and the reference variable substantially correspond.

5. Method according to Claim 4,
**characterized in that** the wear compensation parameter represents the number of clutch actuation processes that have been carried out.

6. Method according to Claim 4 or 5,
**characterized in that** the wear compensation parameter represents the frictional work imparted in a clutch region.

7. Method according to one of Claims 4 to 6,
**characterized in that** the wear compensation parameter represents the energy transmitted via the clutch region (10; 10a; 10b', 10b").

8. Method according to one of Claims 4 to 7,
**characterized in that** the wear compensation parameter represents the distance travelled by a vehicle.

9. Method according to one of Claims 4 to 8,
**characterized in that** the wear compensation parameter represents the time that has elapsed.

10. Method according to one of Claims 1 to 9,
**characterized in that** measure b) is executed every time measure a) is executed.

11. Method according to Claim 10,
**characterized in that**, after execution of measure b), the engagement force determined for the execution of measure a) for said clutch engagement process, and/or the determined engagement travel, is provided.

12. Method according to one of Claims 1 to 11,
**characterized in that** the wear-compensation readjustment region (32; 32a; 32b', 32b") comprises, in the engagement-force transmission path to the pressure plate (18; 18a; 18b', 18b") and/or in the engagement reaction force support path, at least one wear-compensation readjustment element (36; 38; 36a, 38a; 36b', 38b') that can be displaced after the occurrence and detection of wear.

## Revendications

1. Procédé pour actionner un système d'embrayage automatisé du type normalement ouvert, lequel système d'embrayage comprend au moins une région d'embrayage (10 ; 10a ; 10b' ; 10b") avec une plaque de pressage (18 ; 18a ; 18b' ; 18b") pouvant être sollicitée par un système de génération de force d'embrayage (F ; F' ; F"), une butée (16 ; 16a ; 64b) et un agencement de disque d'embrayage (20 ; 20a ; 20b', 20b") pouvant être serré entre la plaque de pressage (18 ; 18a ; 18b' ; 18b") et la butée (16 ; 16a ; 64b), le système de génération de force d'embrayage (F ; F' ; F") présentant un agencement d'actionneur (F ; F' ; F") qui fournit au moins une partie de la force d'embrayage requise pour solliciter la plaque de pressage (18 ; 18a ; 18b', 18b"), comprenant en outre un agencement de compensation de l'usure (30 ; 30a ; 30b', 30b") ayant une région de détection de l'usure (34 ; 34a ; 34b', 34b") et une région de rajustement de l'usure (32 ; 32a ; 32b', 32b"), la région de détection de l'usure (34 ; 34a ; 34b', 34b") comprenant au moins un élément de détection de l'usure (42 ; 42a ; 42b') qui, en présence d'une usure dans l'installation de détection de l'usure, peut être amené contre un élément conjugué de détection de l'usure (16 ; 26a ; 70b'), le procédé comprenant les mesures suivantes :
a) pour le mode de transfert de couple, génération d'une force d'embrayage de fonctionnement et/ou parcours d'une course d'embrayage de fonctionnement en fonction d'un couple à transférer par le biais d'une région d'embrayage (10 ; 10a ; 10b' ; 10b") ou d'une grandeur associée à celui-ci,
b) pour un mode de compensation de l'usure, génération d'une force d'embrayage de compensation de l'usure, qui provoque un décalage d'embrayage maximal de la plaque de pressage (18 ; 18a ; 18b', 18b"), pour amener la région d'embrayage (10 ; 10a ; 10b', 10b") dans une position d'actionnement d'embrayage de détection de l'usure, et en l'occurrence déplacement de l'élément de détection de l'usure (42 ; 42a ; 42b') par application contre l'élément conjuguée de détection de l'usure (16 ; 26a ; 70b) dans une position représentant l'usure existante, qui permet à la région de rajustement de l'usure (32 ; 32a ; 32b', 32b") d'effectuer une opération de rajustement de l'usure.

2. Procédé selon la revendication 1,
**caractérisé en ce que** lors de la mise en oeuvre de la mesure a), une force d'embrayage est produite, laquelle provoque, dans la région d'embrayage (10 ; 10a ; 10b', 10b") la fourniture d'un couple d'embrayage, qui se situe dans la région du couple à transmettre par le biais de la région d'embrayage (10 ; 10a ; 10b', 10b").

3. Procédé selon la revendication 1 ou 2,
**caractérisé en ce que** lors de la mise en oeuvre de la mesure b), on fournit en tant que force d'embrayage de compensation de l'usure une force d'embrayage pouvant être produite au maximum par le système de génération de force d'embrayage (F ; F', F").

4. Procédé selon l'une quelconque des revendications 1 à 3,
**caractérisé en ce qu'**un paramètre de compensation de l'usure est déterminé et est comparé à une grandeur de référence, la mesure b) étant mise en oeuvre lorsqu'il se produit une coïncidence sensible entre le paramètre de compensation de l'usure et la grandeur de référence.

5. Procédé selon la revendication 4,
**caractérisé en ce que** le paramètre de compensation de l'usure représente le nombre d'opérations d'actionnement de l'embrayage effectuées.

6. Procédé selon la revendication 4 ou 5,
**caractérisé en ce que** le paramètre de compensation de l'usure représente le travail de friction réalisé dans une région d'embrayage.

7. Procédé selon l'une quelconque des revendications 4 à 6,
**caractérisé en ce que** le paramètre de compensation de l'usure représente l'énergie transmise par le biais de la région d'embrayage (10 ; 10a ; 10b', 10b").

8. Procédé selon l'une quelconque des revendications 4 à 7,
**caractérisé en ce que** le paramètre de compensation de l'usure représente la distance parcourue avec un véhicule.

9. Procédé selon l'une quelconque des revendications 4 à 8,
**caractérisé en ce que** le paramètre de compensation de l'usure représente le temps écoulé.

10. Procédé selon l'une quelconque des revendications 1 à 9,
**caractérisé en ce que** la mesure b) est mise en oeuvre chaque fois que la mesure a) est mise en oeuvre.

11. Procédé selon la revendication 10,
**caractérisé en ce qu'**après la mise en oeuvre de la mesure b), la force d'embrayage déterminée pour mettre en oeuvre la mesure a) pour cette opération d'embrayage et/ou la course parcourue déterminée est fournie.

12. Procédé selon l'une quelconque des revendications 1 à 11,
**caractérisé en ce que** la région de rajustement de l'usure (32 ; 32a ; 32b', 32b") comprend, dans la voie de transfert de la force d'embrayage vers la plaque de pressage (18 ; 18a ; 18b', 18b") et/ou dans la voie de support de la force de réaction d'embrayage, au moins un élément de rajustement de l'usure (36 ; 38 ; 36a, 38a ; 36b', 38b') déplaçable après l'apparition et la détection de l'usure.
